(19) Europäisches Patentamt
European Patent Office
Office européen des brevets

(11) Publication number: **0 201 411 A2**

# (12) EUROPEAN PATENT APPLICATION

(21) Application number: **86400934.5**

(22) Date of filing: **29.04.86**

(51) Int. Cl.[4]: **C 08 F 8/20**, C 08 F 12/16, C 08 L 67/00, C 08 L 77/00

(30) Priority: **03.05.85 US 730126**

(43) Date of publication of application: **12.11.86 Bulletin 86/46**

(84) Designated Contracting States: **BE DE FR GB IT NL**

(71) Applicant: **THE DOW CHEMICAL COMPANY, 2030 Dow Center Abbott Road P.O. Box 1967, Midland, MI 48640 (US)**

(72) Inventor: **Falardeau, Edward Robert, 1812 Eastman Road, Midland Michigan 48640 (US)**
Inventor: **Mills, Jack F., 4524 Andre Street, Midland Michigan 48640 (US)**
Inventor: **Tigner, Ronald Gordon, 2515 Walter Road, Coleman Michigan 48618 (US)**
Inventor: **Hipple, Jack W., 148 Willow Gate Rise, Holliston Massachusetts 01746 (US)**

(74) Representative: **Peuscet, Jacques, Cabinet Peuscet 68, rue d'Hauteville, F-75010 Paris (FR)**

## (54) Brominated polymers of alkenyl aromatic compounds.

(57) Brominated polymers of anionically polymerized alkenyl aromatic compounds exhibit improved color, and can be formulated in host polymers to give end products having reduced color.

EP 0 201 411 A2

# BROMINATED POLYMERS OF ALKENYL AROMATIC COMPOUNDS

The present invention relates to ring-brominated alkenyl aromatic polymers and a process for the preparation of said compounds.

Brominated polymers of alkenyl aromatic compounds are useful as flame retardants for thermoplastic resins. There are many known methods for the preparation of ring-brominated polymers of alkenyl aromatic compounds, with most attention directed to the production of brominated polystyrene. Early methods created products wherein many of the aliphatically bonded hydrogen atoms were replaced by bromine atoms. Such products are unsuitable for a number of end uses, as they evolve hydrogen bromide at temperatures of from 180°C to 250°C. Even when they contain only very small amounts of aliphatically bonded bromine, they develop a dark discoloration at temperatures above 200°C.

U.S. Patent Nos. 4,143,221 and 4,074,032 disclose processes for the preparation of heat-stable brominated oligomers of styrene. However, for many

applications it is desirable to have heat-stable brominated polymers of high molecular weight. U.S. Patent No. 4,360,455 describes a process for preparing brominated polystyrenes having a degree of polymerization of from 3 to 400, i.e., the molecular weight of the final product is from 786 to 105,000. However, said process requires that the bromination be performed in the presence of certain low molecular weight aromatic compounds.

U.S. Patent No. 4,352,909 describes the preparation of tribrominated polystyrene and styrene oligomers. Said process employs bromine chloride as the brominating agent and thus, typically from 1 to 2 weight percent of the product is chlorine. Activated charcoal is employed to filter the solution of brominated polystyrene in an attempt to remove color traces from the product. This filtration step entails additional expense and adds to the cost of the product. The patent discusses in great detail the effect of water on Lewis acid catalysts, and teaches that the process should be conducted under substantially anhydrous conditions.

U.S. Patent No. 4,200,703 discloses a process for the manufacture of heat-stable, nuclear brominated polystyrenes. The process involves brominating, at a temperature of from -20°C to 40°C, a polystyrene dissolved in a chlorinated hydrocarbon in the presence of a Lewis acid catalyst and from 0.02 to 2 moles, per mole of Lewis acid catalyst, of a nucleophilic substance which acts as a Lewis base for the Lewis acid. The process is capable of making high molecular weight products without subjecting the polystyrene starting

material to hydrogenation. The products are generally free of cross-linking. However, the color of the solid products ranges from ochre-colored in Example 2 to pale beige in Example 4 to "white" in Examples 3 and 5 to pale yellow in Example 6.

When brominated polystyrene is employed as a flame retardant in thermoplastics, its color is of great interest to the manufacturer of thermoplastic materials. The manufacturer desires a white-colored brominated polystyrene so that the color of the thermoplastic article, or part, into which the brominated polystyrene is incorporated is not affected. Therefore, in view of the needs of the manufacturer of thermoplastic parts, and in view of the inadequacy of prior art processes to produce a brominated polymer of an alkenyl aromatic compound having the desired white color characteristics, it would be desirable to have a brominated polymer of an alkenyl aromatic compound of degree of polymerization >400 with an improved white appearance as manufactured and, more importantly, as white an appearance when formulated into a final plastic formulation as that produced by the product made by the process described herein.

The present invention is such a brominated polymer and a process for the preparation thereof. The inventive composition comprises a heat-stable ring--brominated, anionically polymerized polymer of an alkenyl aromatic compound having an alkyl halide content of less than about 1500 ppm, and a degree of polymerization of greater than about 400. Surprisingly, brominating anionically polymerized starting materials with a degree of polymerization greater than

about 400, as opposed to similar free radically polymerized polymers, results in a brominated polymer having improved color characteristics. As indicated hereinabove, there are several methods of making brominated polystyrene. However, none of the known processes produce, with or without special processing to remove color, a brominated polystyrene product of degree of polymerization >400 with a white appearance as manufactured and, more importantly, as white an appearance when formulated into a final plastic formulation as that produced by the product made by the process described herein. Further, the improved color of the final plastics formulation using the process herein described has not been duplicated using special or more expensive processing. The brominated polystyrenes of the present invention are especially useful when formulated into compositions which comprise at least one thermoplastic selected from nylons and polyesters.

The brominated polymers of the present invention advantageously are prepared by contacting under reaction conditions a brominating agent with a solution of an anionically polymerized polymer of an alkenyl aromatic compound in a solvent in the presence of a catalytic amount of a Lewis acid and from 0.2 to 2.5 moles, per mole of Lewis acid, of a nucleophilic substance which acts as a Lewis base for the Lewis acid, the amount of nucleophilic Lewis base being selected within this range such that the polymer is essentially not cross-linked during bromination.

By the term alkenyl aromatic compound is meant an anionically polymerizable monomer having at least one alkenyl moiety bonded to an aromatic moiety.

Examples of typical alkenyl aromatic monomers which can be used alone or in admixture with one another include, for example; styrene, α-methylstyrene, vinyl toluene, with paravinyltoluene being the preferred isomer, ethyl styrene, propyl styrene, t-butylstyrene, octylstyrene, vinylnapthalene, vinyl biphenyl, vinyl anthracene and the like, and all isomers thereof. Preferred alkenyl aromatic compounds are represented generally by the formula:

$$Ar-\overset{R}{\overset{|}{C}}=CH_2$$

wherein R is hydrogen or methyl, Ar is an aromatic ring structure having from 1 to 3 aromatic rings with or without alkyl or halogen substitution wherein any alkyl group contains from 1 to 6 carbon atoms. Styrene is the most preferred alkenyl aromatic compound.

The polymeric starting material, i.e., the polymer of an alkenyl aromatic compound, is prepared by anionically polymerizing at least one alkenyl aromatic compound. The polymeric starting material can be a homopolymer or a polymer of a number of monomers, including monomers which are not alkenyl aromatic monomers, so long as at least one of the monomers is an alkenyl aromatic compound. Thus, for the purposes of the present invention, the term "polymer of an alkenyl aromatic compound" means any polymer prepared using at least one alkenyl aromatic compound and optionally one or more comonomers. Anionic polymerization is well-known in the art as are anionic polymerizations wherein a color change occurs when polymerization takes place under the influence of an anionic

initiator. Representative polymerization systems are set forth in the following U.S. Patents: 2,975,160; 3,030,346; 3,031,432; 3,139,416; 3,157,604; 3,159,587; 3,231,635; 3,498,960; 3,590,008; 3,751,403; 3,954,894; 4,183,877; 4,196,153; 4,196,154; 4,200,713; 4,205,016 and 4,389,517. The method of U.S. Patent No. 4,389,517, which employs a continuously stirred tank reactor, is preferably employed in the preparation of the polymeric starting material. Preferably, the polymerization is terminated in a manner such that thermal termination is minimized.

A solvent advantageously is employed in the process of the present invention. The solvent can be virtually any compound or mixture of compounds in which the polymeric starting material is soluble. Preferably, the solvent is a brominated or chlorinated hydrocarbon. The solvent can be selected using known criteria. See, e.g., the teaching of U.S. Patent No. 4,200,703 at column 4 which includes examples of suitable solvents such as dichloromethane (methylene chloride), dichloroethane (ethylene dichloride), and others. Methylene chloride is the most preferred solvent. The solvent is employed in an amount such that a solution of the polymeric starting material and the solvent is formed. Typically, the solution contains from 5 to 20 weight percent of the polymeric starting material. Preferably, the solution contains from 12 to 18 weight percent and most preferably from 14 to 16 weight percent of the polymeric starting material.

A brominating agent is employed as a source of bromine atoms. It is known in the art to employ,

e.g., HBr oxidized in situ, BrCl or $Br_2$ as a brominating agent. Preferably, $Br_2$ is employed as the brominating agent. The brominating agent is employed in an amount sufficient to provide the desired amount of bromine in the brominated polymer product. For example, approximately a one to one molar ratio of $Br_2$ to polystyrene monomer unit is employed to achieve a 43 weight percent bromine content in the product. Higher degrees of bromination require relatively larger amounts of bromine, e.g., to get 61 percent bromine in a polystyrene product requires a molar ratio of 2.

A Lewis acid catalyst is employed advantageously in the process of the present invention. Examples of suitable catalysts include the conventional Lewis acids, e.g., of the $AlCl_3$, $AlBr_3$, $FeCl_3$, $FeBr_3$, Fe, $SbCl_5$, $BF_3$, $TiCl_4$, $SnCl_4$, $ZnCl_2$, $CaBr_2$, CuBr or $I_2$ type, with the aluminum halides and iron halides, especially $FeCl_3$ and $AlCl_3$, being preferred. $FeCl_3$ is the most preferred catalyst. The catalyst is employed in a catalytic amount. Preferably, from 0.2 to 5 weight parts of catalyst are employed per weight part of polymeric starting material. Most preferably, from 0.3 to 1.2 weight parts of catalyst are employed per weight part of polymeric starting material.

In order to avoid cross-linking, the catalyst is modified by adding a small amount of a nucleophilic substance (i.e., a Lewis base) which enters into an acid/base equilibrium with the Lewis acid. As a rule, such a substance is a compound which has one or more free electron pairs through which it forms an association complex with the electron acceptor (Lewis acid). Lewis bases of this type can be either inorganic, such as $H_2O$, $H_2S$, $NH_3$, $PCl_3$, $PBr_3$, $SO_2$, or $SCl_4$; or organic,

such as, for example, alcohols, such as methanol, ethanol or glycol; ethers, such as diethyl ether, methyl butyl ether or dioxane; esters, such as ethyl acetate or ethyl formate; amides, such as dimethylformamide or ethylacetamide; carboxylic acids, such as acetic acid, oxalic acid or benzoic acid; acid chlorides, such as acetyl chloride or benzoyl chloride; ketones, such as benzophenone; aldehydes, such as chloral or benzaldehyde; amines, such as amylamine or piperidine; nitriles, such as acetonitrile or butyronitrile; nitro compounds, such as nitromethane or nitrobenzene; or pyridine or thiophene. These examples are only meant to be illustrative of compounds which satisfy the principles of a Lewis base as mentioned above, and do not represent a complete list of the manifold possibilities for such modifiers. For convenience, water is the preferred nucleophilic substance, especially at reaction temperatures of from -20°C to 10°C.

The nucleophilic substance is employed in an amount which avoids cross-linking but which does not completely deactivate the catalyst. Preferably, from 0.2 to 2.5 moles of the nucleophilic substance are employed per mole of catalyst. More preferably, from 0.33 to 2 moles of nucleophilic substance are employed per mole of catalyst. In contrast to U.S. Patent No. 4,200,703 which teaches that from 0.05 to 0.2 mole of water per mole of $FeCl_3$ is an optimum amount, the present invention most preferably employs from 0.33 to 2 moles of water per mole of $FeCl_3$.

In a preferred embodiment of the present invention, bromine is added to a solution of polymeric

starting material in the chlorinated hydrocarbon solvent. The catalyst and the nucleophilic substance are preferably added to the solution prior to the bromine. The bromine is contacted with the solution at a rate such that the reaction proceeds at an acceptable rate and the temperature of the solution remains within the desired range.

The process of the present invention can be performed at any combination of temperature and pressure at which the bromination will proceed. Typically, the process is carried out at a temperature of from -5°C to 15°C. Lower temperatures can be employed but the rate of reaction generally is undesirably slow. Higher temperatures can be employed but can be undesirable, as the onset of undesirable alkyl bromination can take place. Preferably, the reaction is conducted at a temperature of from 0°C to 10°C, most preferably from 5°C to 7°C. The process of the present invention can be conducted at sub- or superatmospheric pressure. Preferably, and for the sake of convenience, the process is conducted at ambient pressure. The time required for the reaction to be complete will vary as a function of the reaction conditions such as, for example, catalyst concentration, reactant concentrations, temperature, etc. Reaction completion to a desired bromine level can be determined by known methods such as observing temperature, amount of brominating agent added, weight of the reaction mixture, rate of evolution of HBr, and the like.

The reaction product can be recovered using known methods. For example, when the reaction reaches the desired degree of completion the catalyst preferably is deactivated by adding water, and preferably is

washed out together with HBr or HCl. If small residual amounts of bromine are present, a reducing agent such as, for example, $Na_2S_2O_3$ or $NaHSO_3$ can be added to the water. Washing steps using dilute sodium carbonate solution and pure water can follow in order to obtain a salt-free, neutral, product solution. A solid product can be obtained via methods known in the art such as, for example, by evaporating the solvent and other volatile materials at elevated temperature as is done in, e.g., tray drying or spray drying. It is preferred to recover the product by adding the neutralized product solution to a recovery solvent at ambient temperature to precipitate the product. The recovery solvent can be any material in which the brominated product has low solubility or zero solubility and in which the reaction solvent is soluble.

A more preferred recovery technique is exemplified by adding the neutralized product solution to a recovery solvent at a temperature above the boiling point of the reaction solvent. The recovery solvent is a composition which preferably is a liquid at the recovery conditions employed, and is a composition in which the brominated product is insoluble or not readily soluble. Examples of preferred recovery solvents include methanol, butanol and water, with water being the most preferred. Water is unique as a recovery solvent in that it is cheap and in that it need not be recycled for commercial use. In addition, it is easy to remove traces of water from $CH_2Cl_2$, the most preferred reaction solvent, in order to allow subsequent recycle of $CH_2Cl_2$. The use of anionically polymerized polystyrene as the feed polymer allows the use of the water recovery technique. Commercially available,

i.e., free radically polymerized, polystyrenes give yellow products when recovered this way and thus there is a further advantage associated with the use of anionically polymerized polystyrene as the feed polymer.

The brominated product will precipitate due to its low solubility in the recovery solvent. The temperature of the recovery solvent preferably is such that the reaction solvent will rapidly evaporate, or flash, out of the recovery solvent. The rate of addition of the neutralized product solution to the recovery solvent is governed by practical considerations, such as, for example, degree of agitation, temperature of the recovery solvent, pressure, concentration of product in the reaction medium, etc. A suitable rate of addition can be determined easily by routine experimentation. The resulting precipitate can be recovered from the liquid and dried using known methods such as, for example, filtration or centrifugation followed by any suitable drying method. The drying typically is conducted at a temperature of from 50°C to 90°C under partial vacuum.

A novel, heat-stable, ring-brominated polymer of an alkenyl aromatic compound is formed when the process of the present invention is carried out as described hereinbefore. The product has a degree of polymerization of at least about 400, and is essentially not cross-linked as evidenced by size exclusion chromatography (hereinafter SEC) and/or light scattering techniques. Preferably, the product has a degree of polymerization of from 400 to 5000. The product is heat-stable. For the purposes of the present invention, the term "heat-stable" means the product loses $<1$ weight percent when heated to a temperature of 320°C

and when measured via thermogravimetric analysis (hereinafter TGA). Compared to similar commercially available brominated polymers of alkenyl aromatic compounds, the brominated products of the present invention have narrower molecular weight distributions. This is advantageous in that more defined control of melt properties is expected. Additionally, the brominated products of the present invention have lower residual alkyl halide content than similar commercially available products. Typically, residual alkyl halide values for 61 percent brominated polystyrene are less than about 1100 ppm; preferably less than about 800 ppm; most preferably less than about 400 ppm. The elimination of alkyl halides is advantageous because of the relative thermal instability of alkyl halides compared to the aromatic halides of brominated polystyrene. The aromatic bromines survive plastics processing temperatures; aliphatic bromines typically do not and result in the release of hydrogen bromide from the brominated polymer. Hydrogen bromide is corrosive to equipment and can degrade a host polymer. In addition, if the alkyl bromide is in a random position on the brominated polystyrene, backbone chain scission and color site formation is possible. Thus, corrosion, color, and polymer physical properties are improved by the elimination of alkyl halides.

Reduced color is perhaps the most significant advantage of the product of the present invention over the brominated polymeric products of the prior art with a degree of polymerization >400. Reduced color refers in a minor sense to the visual appearance of the brominated polystyrene itself as manufactured and in a major sense to the color it imparts to a final plastics

formulation containing the brominated polystyrene at the levels required to perform the desired flame retarding function.

The product brominated polymers of alkenyl aromatic compounds of the present invention typically contain up to about 68 weight percent bromine. Preferred products contain from 15 to 68 weight percent bromine. More preferably, the brominated polymer of an alkenyl aromatic compound contains from 43 to 66 weight percent bromine, most preferably, from 61 to 66 weight percent bromine. The molecular weight of the product is a function of the bromine content and of the molecular weight of the polymeric starting material. For example, the product typically has a weight average molecular weight of at least about 40,000 for 1 percent bromine content, at least about 72,000 for 43 percent bromine, and at least about 120,000 for 68 percent bromine.

The product brominated polymers of alkenyl aromatic compounds and mixtures thereof can be employed as a flame retardant additive in the formulation of thermoplastic resins. Said resins, their uses, and the many techniques employed in their formulation are well-known to those skilled in the art. Examples of preferred resins include, for example, thermoplastic polyesters such as polybutylene terephthalate and polyethylene terephthalate; and nylons such as nylon 6 and nylon 66. The brominated products of the present invention are employed in a flame-retarding amount, i.e., in an amount which will slow the burn rate of an ignited thermoplastic formulation in comparison to the burn

rate of an identical thermoplastic formulation which does not contain a brominated product of the present invention. Preferably, the brominated products of the present invention are employed in an amount such that the final formulated resin composition contains from 4 to 18 weight percent bromine.

The following preparations and examples are given to illustrate the invention and should not be construed as limiting its scope. All parts and percentages are by weight unless otherwise indicated. All molecular weights are weight average molecular weights.

Example 1

Anionically polymerized polystyrene (78 g) having a weight average molecular weight of 229,000 and $CH_2Cl_2$ (332 ml, 442 g), which contains 0.005 percent water, are placed into a 1-liter glass flask equipped with a stirring means and a temperature controlling means. The polymer is dissolved, then 0.5 g $FeCl_3$ is added and the solution is cooled to 2°C. Bromine (240 g) is added to the flask at a rate of 1.4 moles/-hour $Br_2$ while keeping the temperature at approximately 5°C. Total contact time is 3 hours. The water/catalyst molar ratio for this reaction is 0.33. Water (100 ml) is added to the solution to kill the catalyst, followed by 30 ml of 20 percent $NaHSO_3$. The solution is washed and decanted four times, each washing was conducted with 500 ml of water. The solution is made alkaline with NaOH and is washed three times. The organic phase is diluted to a total volume of 5 liters with $CH_2Cl_2$ and the brominated polystyrene is precipitated by adding the organic solution to methanol at ambient temperature. The brominated polystyrene is filtered

from the methanol and dried. The 191 g of dried product is brominated polystyrene, and represents a 97 percent recovered yield of 61 weight percent bromine brominated polystyrene. The weight average molecular weight of the brominated polystyrene is 560,000 as determined by SEC and light scattering techniques. The product is white in appearance and has an alkyl halide content of 393 ppm bromine.

Example 2 - Operation outside of the preferred water/$FeCl_3$ catalyst ratio

The procedure of Example 1 is repeated except that 631 g of $CH_2Cl_2$ containing 0.005 percent water and 1.64 g of $FeCl_3$ are employed. The water/-catalyst mole ratio is 0.2. The resultant brominated polystyrene contains 61 percent bromine, and is white in color with a molecular weight of 772,000 (SEC + light scattering) with a shoulder on the high molecular weight edge of the weight average molecular weight curve indicating the onset of cross-linking. A recovered yield of 98 percent is calculated based on the 192 g of recovered material.

Example 3

The procedure of Example 2 is repeated except that 0.5 g of $FeCl_3$ is employed. The water/-catalyst ratio is 0.7. The brominated polystyrene contains 61 percent bromine, is produced in a 97 percent recovered yield (190 g), and is a white product. The molecular weight is 572,000 with no evidence of cross-linking.

Example 4 - Hot Water Recovery

Anionically polymerized polystyrene (25 lb) having a molecular weight of 200,000 is dissolved in a 100-gallon glass-lined Pfaudler reactor in 300 lb of $CH_2Cl_2$ containing 32 ppm of water and the solution is cooled to 1°C. $FeCl_3$ (115 g) is added to the solution. The water/catalyst ratio is about 0.34. $Br_2$ (77 lb) is added over 1.3 hours at a rate sufficient to keep the reactor temperature at approximately 1°C-6°C. Total contact time is 2.5 hours. The catalyst is killed by the addition of 30 gallons of water. The solution is washed four times with 30 gallons of water each time, and is made alkaline with NaOH. The solution of $CH_2Cl_2$ and brominated polystyrene is introduced into 50 gallons of agitated hot water held at 78°C-80°C. The $CH_2Cl_2$ is stripped off leaving a slurry of granulated brominated polystyrene in water which is filtered and dried at 85°C under slight vacuum. The resultant brominated polystyrene has a degree of polymerization of approximately 2,000, a molecular weight of 499,000, an alkyl halide assay of 761 ppm, a bromine content of 60.1 percent, and is white in color. The yield is essentially 100 percent based on bromine disappearance.

Comparative Experiment 1 - Not an embodiment of the present invention

The procedure of Example 4 is repeated except that STYRON® 680 (a trademark of The Dow Chemical Company) having a molecular weight of 202,000 is substituted for the anionically polymerized polystyrene. The resultant product is light yellow, has a molecular weight of 505,000, contains

60.1 percent bromine, and has an alkyl halide assay of 1807 ppm.

Comparative Experiment 2 - Not an embodiment of the present invention

A sample of the recovered brominated polystyrene of Comparative Experiment 1 is redissolved in $CH_2Cl_2$ to make a 20 percent solution. The solution is added to 2 liters of n-butanol which is held at a temperature of from 60°C to 70°C to produce a slurry of granular brominated polystyrene. The slurry is filtered and dried as in Example 4. The alkyl halide content of this very pale yellow material is 1220 ppm. Molecular weight and percent bromine remain the same.

COLOR COMPARISON

Example 5

A combination of 1125 g of a thermoplastic polyester, polybutylene terephthalate (hereinafter PBT), available under the tradename Valox 310 from General Electric, 30 g of $Sb_2O_3$ and 200 g of 61 percent brominated polystyrene having a degree of polymerization ≅ 2000, recovered in hot water, and prepared using the method of Example 4, is accomplished by dry blending followed by extrusion in a ZSK-30 Werner Pfleiderer Twin Screw extruder having a temperature profile of 229°C, 239°C, 242°C, 238°C, 233°C, 229°C. The extruded material is cooled in a water bath and is chopped into pellets. The pellets are injection molded

and the color is measured on a Match-Scan spectrophotometer (available from Diano Corp., Woburn, MA; a subsidiary of Bausch & Lomb) relative to a white blank to give a ΔE of 7.54. The lower the ΔE the whiter the material.

The ΔE is a well-known term which uses three differences (ΔA = red/green, ΔB = yellow/blue, and ΔL = lightness/darkness) to express color matching or difference. As used herein, the term "ΔE" is calculated using the well-known Hunter's Lab equation. Hunter's equation and others are described in an article by Osmer, Dennis in Plastics Compounding, pp. 14-24 (January/February 1983).

Comparative Experiment 3

The procedure of Example 5 is repeated except that the anionically-polymerized brominated polystyrene is replaced with brominated STYRON® 680 brand polystyrene which is prepared following the procedure of Comparative Experiment 1. The brominated polystyrene contains 61 percent bromine, and has a degree of polymerization ≅ 2000. The final plastic has a ΔE of 12.32.

Comparative Experiment 4

The procedure of Comparative Experiment 3 is repeated except that the catalyst is $AlCl_3$. The final plastic has a ΔE of 12.78.

Comparative Experiment 5

The procedure of Comparative Experiment 3 is repeated except that the product is recovered in butanol. The final plastic has a ΔE of 9.05.

Comparative Experiment 6

The procedure of Example 5 is repeated using 1146 g of Valox 310, 30 g of $Sb_2O$, and 179 g of Pyrochek 68PB (a commercially available brominated polystyrene produced by Ferro Corporation). The percentages of $Sb_2O_3$ and bromine are identical to Example 5 and Comparative Experiments 3-5 in the final plastic. The final plastic has a ΔE of 9.18.

An alkyl halide determination made on Pyrochek 68PB, shows 3484 ppm alkyl bromide and 2490 ppm alkyl chloride.

Typical alkyl halide values for brominated polystyrene prepared from anionically-polymerized polystyrene range from ≤100 ppm (the detection limit) to about 500 ppm bromine for product recovered from methanol at ambient temperature, and from 400 to 1000 ppm bromine for product recovered from water. In comparison, typical values for brominated polystyrene prepared from STYRON® 680 and recovered from methanol at ambient temperature range from 500 to 1000 ppm bromine, and from 1500 to 2600 ppm bromine for the same product recovered from water. No alkyl chloride is observed for any sample other than the commercial product of Comparative Experiment 6. Thus, it can be concluded that under any recovery technique brominated polystyrene produced from anionically polymerized polystyrene will produce a high molecular weight material with lower alkyl halide content than brominated polystyrene produced from free radically polymerized polystyrene. Thus, the use of anionically polymerized substrate polymer allows wider selection of process technology at reduced cost, and gives a superior product.

Example 5 and Comparative Experiments 3-6 demonstrate the effects of various parameters on product color, and include a comparative experiment containing a brominated polystyrene representing the commercial state of the art. PBT is selected as the comparison plastic because of its initial white color and representative processing temperature. Comparisons of similar qualitative color effects on other plastics such as, but not limited to, nylon 6,6 and polycarbonates have been observed.

Example 5 and Comparative Experiments 3-6 describe typical brominated polystyrene/$Sb_2O_3$/-PBT formulations. The results support the following conclusions. Regardless of process cleanup technique, brominated polystyrene based on anionic polystyrene surprisingly produces a whiter final plastic than commercially available free radically polymerized polystyrene (compare Example 5 to Comparative Experiments 3-6). Brominated polystyrene produced from anionic polystyrene in an identical fashion to material based on STYRON® 680 produces an even larger differential of color quality in favor of the anionic-based material (compare Example 5 and Comparative Experiment 3). Brominated polystyrene which is prepared from anionic polystyrene and which is recovered by simple water precipitation (note this recovery technique provides merely a way to remove solvent and offers little, if any, color purification relative to alcohol recovery techniques: compare Comparative Experiment 3 and Comparative Experiment 5) produces PBT having superior color as compared to state of the art commercial material at identical percent bromine and percent $Sb_2O_3$ levels

(compare Comparative Experiment 3 and Comparative Experiment 6). Despite a whiter manufactured appearance (visual observance) of brominated polystyrene made with $AlCl_3$, no significant improvement in final plastics was made over $FeCl_3$-catalyzed material (compare Comparative Experiment 3 and Comparative Experiment 4). Thus, superior color performance by anionic polystyrene-based brominated polystyrene materials, regardless of recovery techniques, allows greater flexibility and better economics of manufacture, and gives a superior product.

TABLE I

Alkyl Halide Content

| Run | Alkyl Halide (ppm) | Polymerization Technique | Recovery Solvent | Water: Catalyst Molar ratio |
|---|---|---|---|---|
| Ex.1 | 393 | anionic | methanol | 0.33 |
| Ex.2 | n.m. | anionic | methanol | 0.2 |
| Ex.3 | n.m. | anionic | methanol | 0.7 |
| Ex.4 | 761 | anionic | $H_2O$ | 0.34 |
| C.E.1 | 1807 | free radical | $H_2O$ | 0.34 |
| C.E.2 | 1220 | free radical | butanol (redissolution) | 0.34 |

n.m. = not measured

TABLE II

Color Comparison

| Run | Polymerization Technique | Recovery Solvent | ΔE |
|---|---|---|---|
| Ex.5 | anionic | $H_2O$ | 7.54 |
| C.E.3 | free radical | $H_2O$ | 12.32 |
| C.E.4 | free radical | $H_2O$ | 12.78 |
| C.E.5 | free radical | butanol | 9.05 |
| C.E.6 | - | - | 9.18 |

Note that the formulated product of C.E.6 is prepared using a commercially available brominated polystyrene.

1. A composition comprising a brominated, anionically polymerized polymer of an alkenyl aromatic compound having a bromine content of from 1 to 68 weight percent, a weight average molecular weight of at least 40,000, and an alkyl halide content of less than about 1 weight percent.

2. The composition of Claim 1 wherein the brominated anionically-polymerized polymer is brominated polystyrene, and the $\Delta E$ of a final polymer formulation containing said polymer is lower than the $\Delta E$ of a final polymer formulation which contains brominated free-radically polymerized polystyrene.

3. The composition of Claim 1 wherein the brominated polymer has an alkyl halide content of less than 1100 ppm.

4. The composition of Claim 1 wherein in the final polymer formulation, the host polymer is selected from polybutylene terephthalate, polyethylene terephthalate, nylon 6, and nylon 66.

5. The composition of Claim 4 having a bromine content of from 4 to 18 weight percent.

6. A process for the preparation of heat-stable ring-brominated polymer of an alkenyl aromatic compound comprising contacting under reaction conditions a brominating agent with a solution of anionically-polymerized polymer of an alkenyl aromatic compound in a solvent in the presence of a Lewis acid catalyst, and from 0.2 to 2.5 moles, per mole of Lewis acid catalyst, of a nucleophilic base for the Lewis acid catalyst, such that the polymer is essentially not cross-linked during bromination.

7. The process of Claim 6 wherein the brominating agent is bromine and the anionically-polymerized polymer is polystyrene.

8. The process of Claim 6 or 7 wherein the ring-brominated polymer has an alkyl halide content of less than 1100 ppm.

9. The process of Claim 6, 7 or 8 wherein the nucleophilic base is water, the solvent is a chlorinated or brominated hydrocarbon, and the catalyst is $FeCl_3$.

10. The process of Claim 9 wherein the solvent is methylene chloride.

11. The process of Claim 9 wherein the contacting temperature is from -5°C to 15°C.

12. The process of any one of Claims 6 to 11 wherein the polystyrene starting material has a weight average molecular weight of at least about 40,000.

13. The process of Claim 12 wherein the polystyrene starting material has a weight average molecular weight of from 50,000 to 500,000.

14. The process of Claim 9 including from 0.33 to 2 moles of water per mole of $FeCl_3$, said amount being sufficient so that the polystyrene is essentially not cross-linked during bromination.

15. The process of any one of Claims 6 to 14 wherein the $\Delta E$ of a final polymeric formulation containing the ring-brominated polymer is lower than the $\Delta E$ of a final polymeric formulation which is identical except that it contains brominated free-radically polymerized ring-brominated polymer in place of the anionically--polymerized ring-brominated polymer, the $\Delta E$ being measured according to the Hunter Lab equation, relative to a white blank.